# EUROPÄISCHE PATENTANMELDUNG

(11) **EP 2 339 249 A1**
(43) Veröffentlichungstag der Anmeldung: **29.06.2011**
(21) Anmeldenummer: 09015768.6
(22) Anmeldetag: 21.12.2009
(51) Int. Cl.: F24D 19/10, G05D 23/19

(54) **Verfahren zur Steuerung eines Temperierungssystems für ein Gebäude**

(71) Anmelder: REHAU AG + Co, 95111 Rehau (DE)
(72) Erfinder: Pommer, Willi, 90427 Nürnberg (DE)

(57) **Zusammenfassung**

Die vorliegende Erfindung bezieht sich auf ein Verfahren zur Steuerung eines Temperierungssystems für ein Gebäude, wobei das Temperierungssystem mindestens eine Energiequelle, ein Regelungssystem, eine Eingabevorrichtung 5 und eine oder mehrere Heiz- und/oder Kühlvorrichtungen umfasst, wobei durch ein annähernd stufenloses Einstellen, der Eingabevorrichtung 5 zwischen zwei Grenzwerten ein Satz aufeinander abgestimmter Einstellungen des Regelungssystems derart verändert wird, dass das Temperierungssystem entsprechend der Einstellung der Eingabevorrichtung zwischen den beiden Grenzwerten eines minimalen Energieverbrauchs (Economy) und eines maximalen Benutzerkomforts (Comfort) betrieben wird.

## Beschreibung

Die vorliegende Erfindung bezieht sich auf ein Verfahren zur Steuerung eines Temperierungssystems für ein Gebäude, wobei das Temperierungssystem mindestens eine Energiequelle, ein Regelungssystem und eine Einstellungsvorrichtung umfasst.

Bei der Regelung von Heizungs- oder Klimaanlagen werden diskrete Betriebszustände wie normaler Betrieb, reduzierter Betrieb und Urlaubsmodus eingestellt. Jeder dieser Betriebszustände gibt der Heizungs- oder Klimaanlage sich unterscheidende, starre Vorgaben bezüglich zu erreichender Sollwerte und Hysteresen. Durch die Wahl dieser Betriebszustände werden die Energieeffizienz sowie der Nutzerkomfort während des Betriebs (beispielsweise niedrigere Raumtemperaturen im reduzierten Betrieb) beeinflusst. Dabei ist aus der DE 40 18 855 A1 und der DE 44 19 765 A1 bekannt, der Regelung während des Verlaufs eines Tages verschiedene Betriebszustände (Tagesprogramm) und während einer Woche verschiedene Tagesprogramme zuzuweisen. Dabei werden den jeweiligen Betriebszuständen feste Zeitintervalle zugewiesen und beim Wechsel zwischen diesen Zeitintervailen erfolgt ein Wechsel von einer Betriebsart in die andere (beispielsweise normaler Heizungsbetrieb von 06:30 Uhr bis 08:00 Uhr und ein reduzierter Betrieb von 08:00 bis 16:00 Uhr).

Darüber hinaus ist aus der DE 10 2006 054 012 A1 ein Verfahren zur Regelung der Innentemperatur eines Fahrzeuges bekannt, wobei über eine manuelle Einstellungsmöglichkeit kurzfristig Einfluss auf die Temperatur und die Menge der zugeführten Luft genommen werden kann und dieser Einfluss automatisch zurückgenommen wird.

Die DE 196 13 021 A1 beschreibt einen Regler für brennerbeheizte Helzungsanlagen mit einem Außentemperaturfühler und einem Speicher, in dem ein von der Außentemperatur und vorgegebenen Zeiten abhängiges Programm zur Regelung der Heizungsanlage eingeschrieben ist, wobei in dem Speicher mehrere Programme wie Komfort, Standard und Öko eingeschrieben sind, die über einen Wahlschalter abrufbar sind. Durch die Änderung der Stellung des Wahlschalters werden weitere Parameter wie Hysterese, Absenkzeit, Pumpendrehzahl usw. verändert, wobei diese Parameter auf die unterschiedlichen Betriebsmodi abgestimmt sind.

Diese Regelungssysteme weisen den Nachteil auf, dass in den jeweiligen einzelnen Betriebszuständen für eine Anzahl von Parametern lediglich starre Vorgaben in Bezug auf Sollwertes, Hysteresen und Schaltpunkte gelten. Geht die Komplexität der Anlage nun jedoch über einfach aufgebaute, durch einen Brenner beheizte Anlagen hinaus (z.B. Versorgung mit Heiz-/Kühlmedium, Raumtemperaturregelung, Integration von Solarthermie, Geothermie und Wohnungslüftung in die Anlage) existiert eine immer weiter wachsende Anzahl an Parametern, so dass die Wirkungsweise jedes einzelnen dieser Parameter selbst für den Fachmann kaum mehr eingeschätzt werden kann. Wenn nun ein normaler Benutzer den Betriebszustand ändern will (beispielsweise um einen energieeffizienteren Betrieb zu erreichen), wäre es jetzt erforderlich, jeden betroffenen Parameter einzeln zu ändern. Dem Nutzer ist jedoch häufig nicht bekannt, welche der Parameter die gewünschte Veränderung des Betriebszustands auch tatsächlich bewirken. Aufgrund der Vielzahl der zu ändernden Parameter wäre dafür auch die Bedienung von teilweise verschachtelten Menüs erforderlich. Häufig sind viele der Parameter, deren Änderung eine Änderung des Betriebszustands bewirken würde, dem Nutzer zur Änderung nicht zugänglich, sondern fallen unter eine Bedienebene des Systems, die nur dem Installateur oder dem Servicepersonal zugänglich sind, was wiederum die Inanspruchnahme einer externen Dienstleistung erforderlich machen würde. Darüber hinaus besteht aufgrund der Vielzahi an miteinander in Wechselwirkung stehender Parameter die Gefahr, dass der Benutzer oder auch der Installateur verschiedene Parameter in Unkenntnis ihrer gegenseitigen Einffussnahme unabsichtlich derart verändert, dass ein ordnungsgemäßer Betrieb der komplexen Anlage nicht mehr gewährleistet ist. Beispielsweise könnte das Einstellen einer zu kleinen Hysterese oder eine Kombination gegenläufiger Einstellungen bewirken, dass durch die vorgenommenen Parameteränderungen nicht der gewünschte, sondern ein gegenteiliger Effekt erzielt wird. Um Kundenbeschwerden aufgrund eines unkomfortablen Betriebs der Heizungsanlage aus dem Weg zu gehen, werden Heizungsanlagen von instattationsbetrieben häufig auf komfortablen Betrieb eingestellt, was aber zu Lasten der Wirtschaftlichkeit des Betriebs der Heizungsanlage geht.

Damit liegt die der vorliegenden Erfindung zugrundeliegende Aufgabe in der Bereitsteilung eines Verfahrens zur Steuerung eines Temperierungssystems für ein Gebäude, das die Nachteile des Stands der Technik überwindet. Durch das erfindungsgemäße Verfahren soll dem Benutzer des Temperierungssystems die Möglichkeit an die Hand gegeben werden, den Betriebsmodus eines Temperierungssystems im Hinblick auf Komfort und dafür erforderlichen Energieaufwand selbst, d.h. ohne Zuhilfenahme der Dienstleistungen von Fachpersonal, und in einfacher Weise beeinflussen zu können. Darüber hinaus soll die Betriebsfähigkeit des Temperierungssystems durch das erfindungsgemäße Verfahren sichergestellt und die Bedienung für den Benutzer vereinfacht werden.

Diese Aufgabe ist erfindungsgemäß durch ein Verfahren zur Steuerung eines Temperierungssystems für ein Gebäude gemäß Patentanspruch 1 gelöst. Bevorzugte Ausführungsformen des erfindungsgemäßen Verfahrens sind in den davon abhängigen Patentansprüchen beschrieben.

Gemäß der vorliegenden Erfindung wurde erkannt, dass eine Anpassung des Betriebs eines Temperierungssystems zwischen dem subjektiven Komfortempfinden des Benutzers und einer möglichst ökonomischen Betriebsweise sich erzielen lässt, wenn mittels einer Eingabevorrichtung annähernd stufenlose Werte zwischen zwei Grenzwerten eingestellt werden können, wobei durch die Einstellung der Eingabevorrichtung ein Satz aufeinander abgestimmter Einstellungen des Regelungssystems verändert wird, wodurch das Temperierungssystem zwischen den beiden Grenzwerten eines minimalen Energieverbrauchs und eines maximalen Benutzerkomforts betrieben wird Gemäß der vorliegenden Erfindung wird es dem Nutzer ermöglicht, durch die Veränderung eines einzelnen Parameters (der Einstellung der Eingabevorrichtung) gleichzeitig einen Satz von aufeinander abgestimmten Parametern, die den Nutzer normalerweise nicht zugänglich sind, derart zu verändern, dass der Betrieb des Temperierungssystems stufenlos zwischen energieeffizienten und komfortbetontem Betrieb erfolgt.

Im Kontext der vorliegenden Erfindung bedeutet der Begriff "annähernd stufenlos" in Bezug auf das Einstehen der Eingabevorrichtung, dass der Bereich zwischen den beiden Grenzwerten in eine Vielzahl sehr kleiner Unterbereiche unterteilt ist, die jeweils einem entsprechend abgestimmten Satz an Parametern zur Regelung des Temperierungssystems entsprechen. Vorzugsweise ist der Bereich zwischen den beiden Grenzwerten dabei in mindestens 100 und besonders bevorzugt in mindestens 1000 Unterbereiche untergliedert.

Erreicht die Eingabevorrichtung den Grenzwert "Komfort-Betrieb", so erfüllt die Temperiervorrichtung stets die Ansprüche des Nutzers in Bezug auf Beheizungsgeschwindigkeit, Abkühlgeschwindigkeit, Trinkwassertemperatur usw. Dagegen werden im Economy-Betrieb zeitweise Unterversorgungen in Kauf genommen, um einen wirtschaftlicheren Betrieb der Temperiervorrichtung zu gewährleisten ("minimaler Energieverbrauch"). Zwischen diesen beiden Grenzwerten kann der Nutzer durch das annähernd stufenlose Einstellen der Eingabevorrichtung eine seinen subjektiven Neigungen entsprechende Betriebsart wählen. Durch die gewählte Einstellung der Eingabevorrichtung nimmt der Nutzer Einfluss auf verschiedene Faktoren wie die Trinkwarmwasserbereitung, die Zieltemperatur der Raumheizung bzw. Raumkühlung, die Geschwindigkeit der Raumheizung bzw. Raumkühlung, die Ausnutzung der Solaranlage und den Betrieb des Wärme-/Kälteerzeugers.

Dementsprechend liegt die vorliegende Erfindung in der Bereitstellung eines Verfahrens zur Steuerung eines Temperierungssystems für ein Gebäude, wobei das Temperierungssystem mindestens eine Energiequelle, ein Regelungssystem, eine Eingabevorrichtung und eine oder mehrere Heiz- und/oder Kühlvorrichtungen umfasst, wobei durch ein annähernd stufenloses Einstellen der Eingabevorrichtung zwischen zwei Grenzwerten ein Satz aufeinander abgestimmter Einstellungen des Regelungssystems derart verändert wird, dass das Temperierungssystem entsprechend der Einstellung der Eingabevorrichtung zwischen den beiden Grenzwerten eines minimalen Energieverbrauchs (Economy-Mode) und eines maximalen βenutzerkomforts (Comfort-Mode) betrieben wird.

Dabei kann es vorteilhaft sein, wenn eine Mittelstellung der Eingabevorrichtung jeweils einem Normalwert der einzelnen, aufeinander abgestimmten Einstellungen des Regelungssystems entspricht. Dadurch ist gewährleistet, dass die Mittelstellung der Eingabevorrichtung einen Standardbetrieb des Temperierungssystems vorgibt.

Es kann auch günstig sein, wenn durch die Eingabevorrichtung durch den Benutzer der Anlage Änderung an Einstellungen des Regelungssystems vorgenommen werden, die der Benutzer sonst direkt nicht vornehmen kann. Dadurch wird verhindert, dass der Benutzer durch Ändern von einander entgegenwirkenden Parametern einen sicheren und wirtschaftlichen Betrieb des Temperierungssystems ausschließt.

Es kann auch nützlich sein, wenn der Satz aufeinander abgestimmter Einstellungen des Regelungssystems die Freigabe des Heizbetriebs bei erstma!iger Unterschreitung der für die Außentemperatur geltenden Heizgrenze bei einer Unterschreitung um einen Mindestwert; die Verzögerung des Beginns des Heizbetriebs bei der voranstehend beschriebenen Freigabe des Heizbetriebs um eine Verzögerungszeit; das Beenden des Heizbetriebs bei einer Überschreitung der Heizgrenze um einen Mindesttemperaturwert; die Mittellage des für die Raumtemperaturregelung geltenden Proportionalbandes zum Sollwert; die Begrenzung der Wärmeabgabe bei Überschreitung des Sollwertes der Raumtemperatur; die Verschiebung des Starts der Raumbeheizung bei erstmaliger Unterschreitung des oder der eingestellten Sollwerte bis zu einer Unterschreitung um einen Mindesttemperaturwert; die Verschiebung des Sollwertes der Warmwassertemperatur; die Hysterese zum Nachheizen des Warmwassers in der Speichervorrichtung; die Wartezeit bis zur Nachladung des Trinkwasserspeichers durch die Energiequelle bei ausbleibendem Solarertrag; die Unterdrückung des Nachheizens des Trinkwasserspeichers bei bestehendem oder zu erwartendem Solarertrag bis zu einer maximalen Unterschreitung des eingestellten Sollwerts; den Faktor, mit dem die Hysterese zum Nachheizen des Warmwassers in der Speichervorrichtung sowie die maximale Unterschreitung des eingestellten Sollwerts in der Absenkzeit multipliziert wird; die Verschiebung des Kriteriums zur Erzeugung eines Anforderungssignals an die Energiequelle; die Korrektur der Zeitdauer der Aufheizootimierung bei zu niedriger Rücklauftemperatur; die Verschiebung des berechneten Startzeitpunktes bei Wechsel der Betriebsart von reduzierten auf normalen Betrieb; die Verschiebung des Sollwerts für die Temperatur des Heizmediums; die Verzögerungszeit zur Aktivierung eines zweiten Wärmeerzeugers; und Kombinationen dieser Einsteillungen umfasst. Diese Parameter haben sich in der Praxis als besonders nützlich zur Einstellung eines Betriebs zwischen den Grenzen eines minimalen Energieverbrauchs und eines maximalen Benutzerkomforts erwiesen. Dabei ist es bevorzugt, wenn die Mittelstellung der Eingabevorrichtung jeweils dem Mittelwert aus den folgenden intervallen entspricht, wobei die zuerst angegebenen Grenzen jedes Intervalls jeweils dem Wert für den energieeffizienten Betrieb und die zuletzt angegebenen Grenzen jedes Intervalls jeweils dem Wert für den komfortbetonten Betrieb entsorechen:
(i) die Freigabe des Heizbetriebs bei erstmaliger Überschreitung der für die Außentemperatur geltenden Heizgrenze bei einer Unterschreitung um einen Mindestwert: [-6K; OK], vorzugsweise [-4K; OK] und besonders bevorzugt [-2K;OK];
(ii) die Verzögerung des Beginns des Heizbetriebs bei der (i) beschriebenen Freigabe des Heizbetriebs um eine Verzögerungszeit: [18h; 0h], vorzugsweise [15h; 0h] und besonders bevorzugt [12h;0h];
(iii) das Beenden des Heizbetriebs bei einer Überschreitung der Heizgrenze um einen Mindesttemperaturwert: [0K; 5K], vorzugsweise [0K; 3K] und besonders bevorzugt [0K; 1K]:
(iv) die Mittellage des für die Raumtamperaturregelung geltenden Proportionalbandes zum Sollwert: [+5K; 0K], vorzugsweise [+2K; 0K] und besonders bevorzugt [+1 K;0K];
(v) die Begrenzung der Wärmeabgabe bei Überschreitung des Sollwertes der Raumtemperatur: [OK; 3K], vorzugsweise [0,3K; 2,5K] und besonders bevorzugt [0,5K;1,5K]
(vi) die Verschiebung des Starts der Raumbeheizung bei erstmaliger Unterschreitung des oder der eingestellten Sollwerte bis zu einer Unterschreitung um einen Mindesttemperaturwert:
   [-4K; 0K], vorzugsweise [-2,5K; 0K] und besonders bevorzugt [-1 K;0K]
(vii) die Verschiebung des Sollwertes der Warmwassertemperatur: [-8K; 8K], vorzugsweise [-6K; +6K] und besonders bevorzugt [-4K; +4K];
(viii) die Hysterese zum Nachheizen des Warmwassers in der Speichervorrichtung:
   [-15K, 0K], vorzugsweise [-12K; -1K] und besonders bevorzugt [-10K; -2K];
(ix) die Wartezeit bis zur Nachladung des Trinkwasserspeichers durch die Energiequelle bei ausbleibendem Solarertrag: [360 min; 0 min], vorzugsweise [240 min; 0 min] und besonders bevorzugt [120 min; 0 min];
(x) die Unterdrückung des Hachheizens des Trinkwasserspeichers bei bestehendem oder zu erwartendem Solarertrag bis zu einer maximalen Unterschreitung des eingestellten Sollwerts: [-20K; 0K], vorzugsweise [-15K; 0K] und besonders bevorzugt [-10K;0K];
(xi) den Faktor, mit dem die Hysterese zum Nachheizen des Warmwassers in der Speichervorrichtung sowie die maximale Unterschreitung des eingestellten Sollwerts in der Absenkzeit mulitpliziert wird: [4; 0], vorzugsweise [3; 0] und besonders bevorzugt [2: 0];
(xii) die Verschiebung des Kriteriums zur Erzeugung eines Anforderungssignals an die Energiequelle: [+30% Öffnungsgrad des Mischers: -30% Öffnungsgrad des Mischers], vorzugsweise [+25% Öffnungsgrad des Mischers; -25% Öffnungsgrad des Mischers] und besonders bevorzugt [+20% Öffnungsgrad des Mischers; -20% Öffnungsgrad des Mischers];
(xiii) die Korrektur der Zeitdauer der Aufheizoptimierung bei zu niedriger Rücklauftemperatur: [-60 min; +60 min], vorzugsweise [-45 min; +45 min] und besonders bevorzugt [- 30 min; + 30 min];
(xiv)die Verschiebung des berechneten Startzeitpunktes bei Wechsel der Betriebsart von reduzierten auf normalen Betrieb: [-60 min; +60 min], vorzugsweise [-45 min; +45 min] und besonders bevorzugt [- 30 min; + 30 min];
(xv) die Verschiebung des Sollwerts für die Temperatur des Heizmediums: [-15K; +15K], vorzugsweise [-10K; +10K] und besonders bevorzugt [-5K;+5K];
(xvi)die Verzögerungszeit zur Aktivierung eines zweiten Wärmeerzeugers: [+120 min; 0 min], vorzugsweise [+90 min; +0 min] und besonders bevorzugt [+60 min; 0 min].

Zwischen den beiden Grenzwerten der Intervalle erfolgt vorzugsweise ein linearer Verlauf der Anpassung der Parameter in Abhängigkeit von der Einstellung der Einstellungsvorrichtung.

Darüber hinaus kann es von Vorteil sein, wenn das Gebäude mehrere Räume umfasst, die durch das Regelungssystem in Prioritätsklassen unterteilt werden, wodurch den Räumen je nach Zugehörigkeit zu einer Prioritätsklasse zulässige Unterschreitungen der Sollraumtemperaturwerte und/oder eine für die zulässige Unterschreitung des Sollraumtemperaturwertes maßgebliche Lage eines Toleranzbandes zum Raumtemperatursollwert durch das Regelungssystem zugewiesen werden. Dadurch können Räumen, in denen der Benutzer ein komfortables Raumklima wünscht (beisoielsweise Wohnzimmer, Badezimmer, Kinderzimmer, Küche und dergleichen), hohe Sollwerte für die Raumtemperatur zugewiesen werden, während anderen Räumen, in denen der Benutzer geringeren Komfort für erforderlich hält, niedrigere Sollraumtemperaturwerte zugewiesen werden (beispielsweise Kellerräume, Schlafzimmer, Hobbyraum und dergleichen). In diesem Zusammenhang kann es weiter von Vorteil sein, wenn eine ausreichende Versorgung derjenigen Räume, die einer hohen Prioritätsklasse zugeordnet sind, sichergestellt ist und eine Unterversorgung derjenigen Räume, die einer niedrigeren Prioritätsklasse zugeordnet sind, zugelassen werden kann. Ein derartiges Vorgehen kann einen Energie sparenderen Betrieb des Temperierungssystems gewährleisten, während der Benutzer nicht auf seinen Komfort in den Räumen mit hoher Prioritätsklasse verzichten muss. Dabei kann es besonders hilfreich sein, wenn die Versorgung von Räumen, denen eine niedrige Prioritätsklasse zugeordnet ist, nach geltendem Sollwert nur dann erfolgt, wenn Räume der hohen Prioritätsklasse versorgt werden müssen. Dadurch wird der Energie einsparende Betrieb des Temperierungssystems weiter gefördert.

Es kann auch günstig sein, wenn an der Eingabevorrichtung die Änderung weiterer Parameter für das Regelungssystem vorgenommen werden kann. Diese weiteren Parameter, die direkt an der Eingabevorrichtung geändert werden können, können beispielsweise die Zuteilung der Räume zu den verschiedenen Prioritätsklassen, die Solltemperatur in der Speichervorrichtung, die Umschaltzeitpunkte der Temperiervorrichtung zwischen normalem und reduziertem Betrieb sowie die Sollraumtemperaturen für die Raumprioritätsklassen umfassen.

Es kann sich auch als vorteilhaft erweisen, wenn das Temperierungssystem als Energiequelle einen Brenner, eine Solarthermie-Vorrichtung, eine Erdwärmesonde, einen Flächen-Wärmetauscher, eine Wärmepumpe-Vorrichtung oder Kombinationen der vorgenannten umfasst. Diese Arten von Energiequellen haben sich zur Anwendung des erfindungsgemäßen Verfahrens als besonders geeignet erwiesen. Dabei hat sich eine Kombination einer Solarthermie-Vorrichtung mit einer Wärmepumpen-Vorrichtung als besonders geeignet erwiesen, wobei diese Kombination darüber hinaus eine Erdwärmesonde und/oder einen Flächen-Wärmetauscher beinhalten kann.

Dabei kann es besonders vorteilhaft sein, wenn das Temperierungssystem als Energiequellen eine Solarthermie-Vorsichtung, eine Wärmepumpen-Vorrichtung sowie eine Erdwärmesonde und/oder einen Hächenwärmetauscher umfasst, wobei das Wärmetragermediurn, das aus der Erdwärmesonde und/oder dem Flächenwärmetauscher zur Wärmepumpe strömt, durch Energie aus der Solarthermie-Vorrichtung weiter erwärmt wird.

Durch das erfindungsgemäße Verfahren wird es ermöglicht, dass ein privater Benutzer seines Heiz-/Kühlsystems den Betrieb des Systems hinsichtlich Komfort und Energiebedarf in einfacher Weise beeinflussen kann. Bei Verwendung des ertindungsgemäßen Verfahrens muss vom Benutzer lediglich eine Änderung der Einstellung der Eingabevorrichtung vorgenommen werden, um dadurch eine sinnvoll abgestimmte Änderung der Betriebsparameter des Heiz-/Kühlsystems vorzunehmen. Es ist gewährleistet, dass die Betriebsfähigkeit des Temperierungssystems nicht gefährdet wird, da einander entgegen gerichtete Wirkungen von Änderungen der verschiedenen Parametern durch den Benutzer verhindert wird, wodurch die Funktionsfähigkeit des Temperierungssystems sichergestellt bleibt. Durch das erfindungsgemäße Verfahren werden darüber hinaus Störungen, ein zusätzlicher ungewollter Energieverbrauch oder Komforteinbußen für den Benutzer aufgrund falscher Bedienung und damit einhergehende Serviceeinsätze des Installationsbetriebs verringert.

Bevorzugte Ausführungsformen der vorliegenden Erfindung werden im Folgenden unter Bezugnahme auf die beigefügten Zeichnungen beschrieben.

### Kurze Beschreibung der Figuren

- Fig. 1: zeigt eine schematische Darstellung eines Temperierungssystems zur Durchführung einer Ausführungsform des erfindungsgemäßen Verfahrens.
- Fig.2: zeigt eine schematische Darstellung eines weiteren Temperierungssystems zur Durchführung einer Ausführungsform des erfindungsgemäßen Verfahrens,

### Detaillierte Beschreibung bevorzugter Ausführungsformen

Die nachstehende Beschreibung der bevorzugten Ausführungsformen bezieht sich aus Gründen der Einfachheit jeweils auf ein Gebäude mit drei Räumen. Es versteht sich jedoch, dass die Erfindung nicht auf ein derartiges Gebäude mit drei Räumen beschränkt ist, sondern ebenso auf Gebäude mit mehr als drei Räumen 4, 4',4", beispielsweise vier, fünf, sechs, sieben, acht, neun, zehn, elf, zwölf usw. Räumen übertragen werden kann.

In den Figuren kennzeichnet ein durchgezogener Doppelpfeil einen Signalfluss zwischen den jeweiligen Komponenten, während ein gestrichelter Pfeil einen Energiefluss von der einen zur anderen Komponente kennzeichnet.

Die in Fig, 1 schematisch dargestellte Temperiervorrichtung zur Durchführung des erfindungsgemäßen Verfahrens umfasst als Energiequellen eine Solaranlage 1 (insbesondere eine Solarthermie-Anlage) und eine Wärmepumpe 2, deren Energie einer Speichervorrichtung 3, vorzugsweise einem Warmwasserspeicher, zugeführt werden kann. Die Temperiervorrichtung ist in einem Gebäude mit drei Räumen 4, 4',4" installiert, die jeweils mindestens eine Heiz- und/oder Kühlvorrichtung beispielsweise eine Fußbodenheizung und/oder einen oder mehrere Heizkörper, aufweise. Darüber hinaus kann in mindestens einem der Räume 4, 4',4", vorzugsweise in allen Räumen 4, 4',4" ein Temperatursensor vorhanden sein. Ein Regelungssystem (nicht abgebildet), dessen Einstellungen über eine Eingabevorrichtung 5, beispielsweise eine Tastatur oder ein Drehregler, verändert werden können, steuert die Zufuhr von in der Speichervorrichtung 3 gespeicherter Energie aus der Speichervorrichtung 3 zu den Heiz- und/oder Kühlvorrichtungen in den einzelnen Räumen 4, 4',4". Die in den einzelnen Räumen 4, 4',4" jeweils herrschende Isttemperatur wird über die Temperatursensoren in den Räumen 4, 4',4" bestimmt und an die Wärmepumpe 2 übermittelt.

Der Benutzer, beispielsweise ein Bewohner des Gebäudes, kann an der Eingabevorrichtung 5 einerseits Änderungen eines Parameters vornehmen, wobei dieser Parameter annähernd stufenlos zwischen zwei Grenzwerten eingestellt werden kann. Bei diesen beiden Grenzwerten handelt es zum einen um eine Betriebsweise des Temperierungssystems mit minimalem Energieverbrauch (Economy-Mode) und zum anderen um eine Betriebsweise des Temperierungssystems mit maximalem Benutzerkomfort (Comfort-Mode) handelt. Das Regelungssystem ordnet dem an der Eingabevorrichtung 5 eingestellten Parameterwert einen Satz von aufeinander abgestimmten Vorgaben für die Energiezufuhr zu den Heiz- und/oder Kühlvorrichtungen in den einzelnen Räumen 4, 4',4" zu, durch die Zufuhr von in der Speichervorrichtung 3 gespeicherter Energie aus der Speichervorrichtung 3 zu den Heiz- und/oder Kühlvorrichtungen in den einzelnen Räumen 4, 4',4" gesteuert wird.

Anderseits kann der Benutzer des Temperierungssystems Änderungen an weiteren Parametern für das Regelungssystems vornehmen. Diese weiteren Parameter, die direkt an der Eingabevorrichtung vom Benutzer geändert werden können, beinhalten die Zuleitung der Räume zu den verschiedenen Prioritätsklassen, die Solltemperatur in der Speichervorrichtung, die Umschaltzeitpunkte der Temperiervorrichtung zwischen normalem und reduziertem Betrieb sowie die Sollraumtemperaturen für die Raumprioritätsklassen umfassen.

Diese beiden Arten von Änderungen können durch den Benutzer an der Einstellungsvorrichtung 5 ohne die Verwendung eines Passwortes vorgenommen werden. Die Änderung der einzelnen Parameter des Parametersatzes können in einer ersten passwortgeschützten Ebene durch den Installationsbetrieb ebenfalls durch die Eingabevorrichtung 5 erfolgen, während die Grundeinstellungen der Regelungsvorrichtung von einem Experten (beispielsweise einem Fachmann des Herstellers der Wärmepumpe) in einer zweiten, durch ein anderes Passwort geschützten Ebene an der Eingabevorrichtung eingegeben werden.

Der Satz der aufeinander abgestimmten Parameter kann dabei beispielsweise die folgenden Parameter beinhalten, wobei sich die Erläuterungen auf eine Änderung in Richtung eines energieeffizienteren Betriebs des Temperierungssystems auf Kosten des Komforts für den Benutzer beziehen, jedoch auch für den komfortbetonteren Betrieb entsprechend Anwendung finden:
- Das Startkriterium für den Heizbetrieb des Temperierungssystems, das sich aus der zeitlich gemittelten Außentemperatur (über einen Außentemperaturfühler bestimmt) ergibt, ist mit einer gleitend einstellbaren Hysterese und Verzögerungszeit versehen, um kurze Laufzeiten des Heizbetriebs zu vermeiden. Dabei können auch die Sollwerte für die Raumtemperaturen entsprechend abgesenkt werden. Im umgekehrten Fall ist auch das Startkriterium für den Kühlbetrieb, das ebenfalls aus der zeitlich gemittelten Außentemperatur resultiert, mit einer gleitend einstellbaren Hysterese und Verzögerungszeit ausgestattet, durch welche ebenfalls kurze Laufzeiten des Kühlbetriebs vermieden werden. Für einen weiteren energieeffizienteren Betrieb können die Sollwerte für die Raumtemperaturen im Kühlbetrieb angehoben werden bzw. im Heizbetrieb abgesenkt werden.
- Die Räume 4, 4',4" des Gebäudes sind durch das Regelungssystem in Prioritätskiassen eingeteilt, wobei jedem Raum jeweils eine unterschiedliche Soltraumtemperatur für den Comfort-Betrieb und den Ecoromy-Betrieb durch das Regelungssystem zugewiesen werden kann. Ebenso können für jeden Raum unabhängige Zeiträume für Comfort-Betrieb und Economy-Betrieb definiert werden. Die Priorisierung der Räume bewirkt nun, dass bei der Verteilung der vorhandenen Energie Räume mit hoher Priorität bevorzugt behandelt werden und diese Räume stärker in die Berechnung der benötigten momentanen Leistung eingehen. Umgekehrt wird in Kauf genommen, dass Räume mit niedriger Priorität bei höherer Energieefizienzeinstellung unterversorgt werden. Dies kann geschehen durch die Einflussnahme auf die Vorlauftemperatur bedingt durch die Verhältnisse in den Räumen höherer Priorität und durch bevorzugtes Verteilen der vorhandenen Energie an die Räume mit höherer Priorität.

- Der Sollwert des Trinkwarmwassers, der bei laufender Solaranlage auf einen niedrigeren Wert gesetzt wird (um eine Nachladung bei Solarertrag zu unterdrücken), wird bei höherer Energieeffzienz-Einstellung an der Eingabevorrichtung (Economy-Betrieb oder Economy-Mode) abgesenkt und die Wartezeit bis zur Nachladung des Trinkwasserspeichers durch die Energiequelle wird bei ausbleibendem Solarertrag verlängert.
- Um eine höhere Energieeffizienz zu erzielen, wird die Einschalthysterese für die Erwärmung des Trinkwarmwassers vergrößert. Der über ein Zeitprogramm gesteuerte, für die Speichernachladung geltende Sollwert wird nicht exakt zu dem Schaltpunkt für den reduzierten Betrieb umdefiniert, sondern über einen durch die Einstellung der Eingabevorrichtung beeinflussten Zeitraum gleitend vom Comfort-Wert zum Economy-Wert bewegt.
- Das Kriterium zur Erzeugung eines Anforderungssignals an den Energieerzeuger (Offnungsgrad des Mischers) wird gleitend beeinflusst, um die Laufzeiten des Energieerzeugers zu verringern bzw. zu bündeln.

Optional kann sich in jedem der Räume 4, 4',4" ein separater Raumregler befinden. Durch den Raumregler kann beispielsweise je nach Bedarf der Sollwert der Raumtemperatur für den jeweiligen Raum einzeln eingesteilt werden. Darüber hinaus können die separaten Raumregler dazu genutzt werden, eine temporäre Aufheizung eines einzelnen Raumes im Bedarfsfall zu bewirken, ohne eine Änderung der Einstellungen im Regelungssystem vornehmen zu müssen.

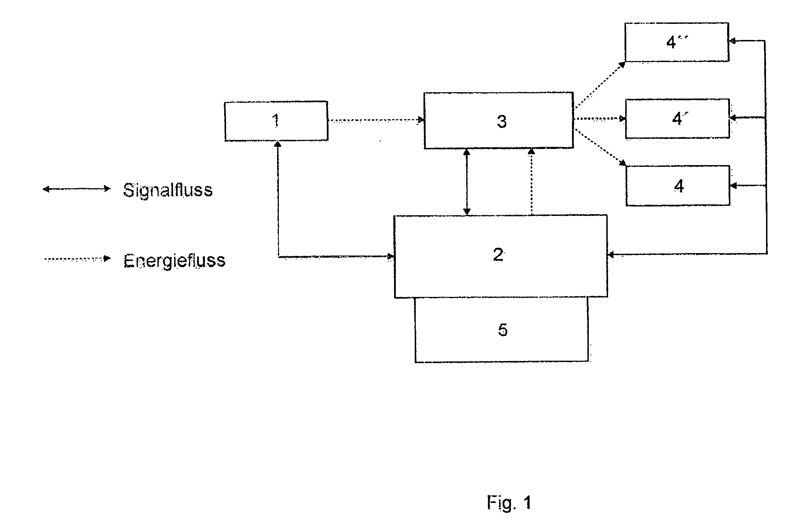

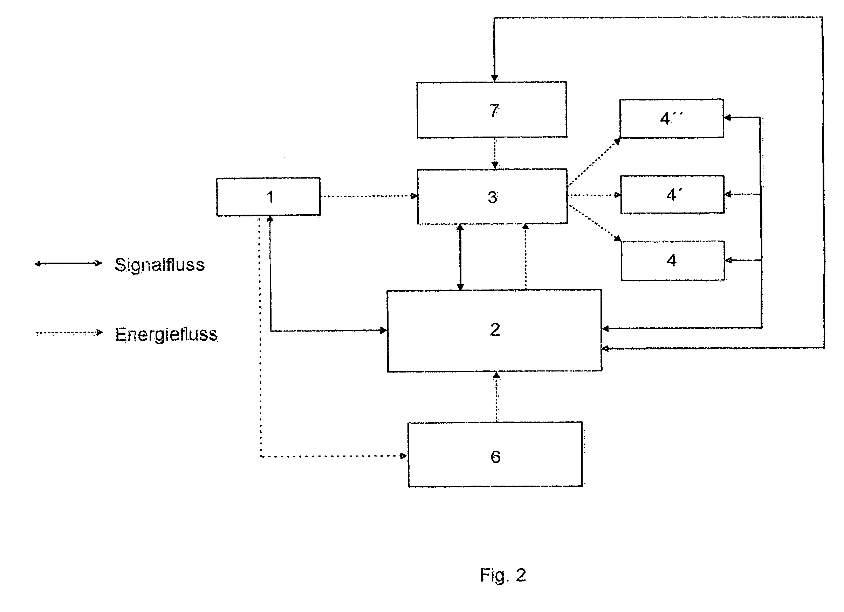

Eine weitere Temperiervorrichtung zur Durchführung des erfindungsgemäßen Verfahrens ist in Fig. 2 dargestellt Die Temperiervorrichtung ist in einem Gebäude mit ebenfalls drei Räumen 4, 4',4" installiert, die jeweils mindestens eine Heiz- und/oder Kühlvorrichtung, beispielsweise eine Fußbodenheizung und/oder einen oder mehrere Heizkörper, aufweisen. Komponenten, die denjenigen entsprechen, die vorstehend unter Bezugnahme auf Figur 1 erläutert wurden, und die Wirkungsweise der diese Komponenten beeinflussenden Parameter werden nicht nochmals im Einzelnen diskutiert. Zusätzlich zu Solarthermie-Anlage 1 und Wärmepumpe 2, die bereits in der in Fig. 1 dargestellten Temperiervorrichtung vorhanden sind, umfasst die in Fig. 2 dargestellte Temperiervorrichtung zur Durchführung des erfindungsgemäßen Verfahrens eine Erdwärmesonde 6 (Geothermie-Sonde) und einen Brenner 7 als zusätzliche Energiequellen, wobei Energie aus der Erdwärmesonde 6 der Wärmepumpe 2 zugeführt wird, während Energie aus dem Brenner 7 direkt zur Erhöhung der Temperatur des Wassers in der Speichervorrichtung 3 eingesetzt wird. Dabei kann das Wärmeträgermedium (z. B. Wasser, Sole, Luft), das aus der Erdwärmesonde 6 zur Wärmepumpe 2 strömt, durch Energie aus der Solarthermie-Anlage 1 weiter erwärmt werden, um den Wirkungsgrad der Wärmepumpe 2 zu erhöhen. Dabei ist das Kriterium für den Start des Heizbetriebs des Brenners 7 (beispielsweise das Unterschreiten einer Mindesttemperatur in der Speichervorrichtung 3 oder einer festgelegten Außentemperatur) als weiteres Kriterium in dem Satz von aufeinander abgestimmten Parametern enthalten.

Weitere Ausführungsformen des erfindungsgemäßen Verfahrens sowie weitere Parameter aus dem Satz der aufeinander abgestimmten Parameter sind für den Fachmann ersichtlich.

Durch das erfindungsgemäße Verfahren wird es dem Benutzer ermöglicht, den Betriebsmodus der Heizungsanlage im Hinblick auf Komfort und dafür erforderlichen Energieaufwand selbst, d.h. ohne Zuhilfenahme der Dienstleistungen von Fachpersonal, und in einfacher Weise beeinflussen zu können. Darüber hinaus ist die Betriebsfähigkeit des Temperierungssystems durch das erfindungsgemäße Verfahren sichergestellt.

## Patentansprüche

1. Verfahren zur Steuerung eines Temperierungssystems für ein Gebäude, wobei das Temperierungssystem mindestens eine Energiequelle, ein Regelungssystem, eine Eingabevorrichtung 5 und eine oder mehrere Heiz- und/oder Kühlvorrichtungen umfasst, wobei durch ein annähernd stufenloses Einstellen der Eingabevorrichtung 5 zwischen zwei Grenzwerten ein Satz aufeinander abgestimmter Einstellungen des Regelungssystems derart verändert wird, dass das Temperierungssystem entsprechend der Einstellung der Eingabevorrichtung zwischen den beiden Grenzwerten eines minimalen Energieverbrauchs (Economy) und eines maximalen Benutzerkomforts (Comfort) betrieben wird.

2. Verfahren gemäß Anspruch 1, **dadurch gekennzeichnet, dass** eine Mittelstellung der Eingabevorrichtung 5 jeweils einem Normalwert der einzelnen, aufeinander abgestimmten Einstellungen des Regelungssystems entspricht.

3. Verfahren gemäß Anspruch 1 oder Anspruch 2, **dadurch gekennzeichnet, dass** durch die Eingabevorrichtung durch den Benutzer der Anlage Änderungen an Einstellungen des Regelungssystems vorgenommen werden, die der Benutzer sonst direkt nicht vornehmen kann.

4. Verfahren gemäß einem der Ansprüche 1 bis 3, **dadurch gekennzeichnet, dass** der Satz aufeinander abgestimmter Einstellungen des Regelungssystems die Freigabe des Heizbetriebs bei erstmaliger Unterschreitung der für die Außentemperatur geltenden Heizgrenze bei einer Unterschreitung um einen Mindestwert; die Verzögerung des Beginns des Heizbetriebs bei voranstehend beschriebener Freigabe des Heizbetriebs um eine Verzögerungszeit; das Beenden des Heizbetriebs bei einer Überschreitung der Heizgrenze um einen Mindesttemperaturwert; die Mittellage des für die Raumtemperaturregelung geltenden Proportionalbandes zum Sollwert die Begrenzung der Wärmeabgabe bei Überschreitung des Sollwertes der Raumtemperatur; die Verschiebung des Starts der Raumbeheizung bei erstmaliger Unterschreitung des oder der eingestellten Sollwerte bis zu einer Unterschreitung um einen Mindesttemperaturwert; die Verschiebung des Sollwertes der Warmwassertemperatur: die Hysterese zum Nachheizen des Warmwassers in der Speichervorrichtung; die Wartezeit bis zur Nachladung des Trinkwasserspeichers durch die Energiequelle bei ausbleibendem Selarertrag; die Unterdrückung des Nachheizens des Trinkwasserspeichers bei bestehendem oder zu erwartendem Solarertrag bis zu einer maximalen Unterschreitung des eingestellten Sollwerts; den Faktor, mit dem die Hysterese zum Nachheizen des Warmwassers in der Speichervorrichtung sowie die maximale Unterschreitung des eingestellten Sollwerts in der Absenkzeit multipliziert wird; die Verschiebung des Kriteriums zur Erzeugung eines Anforderungssignals an die Energiequelle; die Korrektur der Zeitdauer der Aufheizoptimierung bei zu niedriger Rücklauftemperatur; die Verschiebung des berechneten Startzeitpunktes bei Wechsel der Betriebsart von reduzierten auf normalen Betrieb: die Verschiebung des Sollwerts für die Temperatur des Heizmediums; die Verzögerungszeit zur Aktivierung eines zweiten Wärmeerzeugers; und Kombinationen der vorgenannten umfasst.

5. Verfahren gemäß einem der vorhergehenden Ansprüche, **dadurch gekennzeichnet, dass** das Gebäude mehrere Räume 4,4',4" umfasst, die durch das Regelungssystem in Prioritätsklassen unterteilt werden, wodurch den Räumen je nach Zugehörigkeit zu einer Prioritätsklasse zulässige Unterschreitungen der Sollraumtemperaturwerte und/oder eine für die zulässige Unterschreitung des Sollraumtemperaturwertes maßgebliche Lage eines Toleranzbandes zum Raumtemperatursollwert durch das Regelungssystem zugewiesen werden.

6. Verfahren gemäß Anspruch 5. **dadurch gekennzeichnet, dass** eine ausreichende Versorgung derjenigen Räume, die einer hohen Prioritätsklasse zugeordnet sind, sichergesteilt ist und eine Unterversorgung derjenigen Räume, die einer niedrigen Prioritätsklasse zugeordnet sind, zugelassen werden kann.

7. Verfahren gemäß Anspruch 5 oder Anspruch 6. **dadurch gekennzeichnet, dass** die Versorgung von Räumen, denen eine niedrige Prioritätsklasse zugeordnet ist, nach geltendem Sollwert nur dann erfolgt, wenn Räume der hohen Prioritätsklasse versorgt werden müssen.

8. Verfahren gemäß einem der vorhergehenden Ansprüche, **dadurch gekennzeichnet, dass** an der Eingabevorrichtung 5 die Änderung weiterer Parameter für das Regelungssystem vorgenommen werden kann.

9. Verfahren gemäß einem der vorhergehenden Ansprüche, **dadurch gekennzeichnet, dass** das Temperierungssystem als Energiequelle einen Brenner 7, eine Solarthermie-Vorrichtung 1, eine Erdwärmesonde 6, einen Flächenwärmetauscher, eine Wärmepumpen-Vorrichtung 2 oder Kombinationen der vorgenannten umfasst.

10. Verfahren gemäß Anspruch 9, **dadurch gekennzeichnet, dass** das Temperierungssystem als Energiequellen eine Solarthermie-Vorrichtung 1, eine Wärmepumoen-Vorrichtung 2 sowie eine Erdwärmesonde 6 und/oder einen Flächenwärmetauscher umfasst, wobei das Wärmeträgermedium, das aus der Erdwärmesonde 6 und/oder dem Flächenwärmetauscher zur Wärmepumpe 2 strömt, durch Energie aus der Solarthermie-Vorrichtung 1 weiter erwärmt wird.
